# EUROPÄISCHE PATENTANMELDUNG

(11) **EP 1 077 516 A1**
(43) Veröffentlichungstag der Anmeldung: **21.02.2001**
(21) Anmeldenummer: 00890249.6
(22) Anmeldetag: 16.08.2000
(51) Int. Cl.: H02G 3/18

(54) **Installationskasten**

(30) Priorität: 17.08.1999 AT 141299
(71) Anmelder: PC Electric Ges.m.b.H., 4973 St. Martin (AT)
(72) Erfinder: Ehrlich, Robert, Dr., 4600 Wels (AT); Irsigler, Thomas, Ing., 4780 Schärding (AT); Froschauer, Josef, 4780 Schärding (AT)
(74) Vertreter: Kliment, Peter

(57) **Zusammenfassung**

Elektrischer Installationskasten (1) zur Verdrahtung elektrischer Einbauten (4,5) wie beispielsweise Sicherungen, Klemmen, Schalter, Steckdosen und ähnliches, mit einem Bodenteil (2), in welchen elektrische Anschlussleitungen (8) geführt werden und einem daran montierbaren Deckelteil (3), in welchem elektrische Einbauten (4,5) gehalten sind. Um eine einfache Montage sowohl des Kastens an der Wand oder am Boden als auch eine einfache Zuführung der Stromleitung in den Boden des Kastens zu ermöglichen, wird vorgeschlagen, dass der Bodenteil (2) zur fixen Befestigung an einer senkrechten oder waagrechten Ebene vorgesehen ist und die im Deckelteil (3) angeordneten elektrischen Einbauten (4,5) über vorzugsweise flexible Verbindungsleitungen (11) mit einem Steck- bzw. Klemmteil (7) in elektrisch leitender Verbindung stehen, wobei der Steck- bzw. Klemmteil (7) an einem am Bodenteil (2) angeordneten, korrespondierenden Gegensteck- bzw. Gegenklemmteil (10) befestigbar ist, um mit den Anschlussleitungen (8) kontaktiert zu werden.

## Beschreibung

Die vorliegende Erfindung bezieht sich auf einen Installationskasten gemäß Oberbegriff des Anspruchs 1.

Solche Kästen, auch Wandverteiler genannt, dienen dazu unterschiedlichste Anschlüsse für verschiedenste Stromverbraucher zu schaffen. Dabei wird der Boden dieser Kästen vorzugsweise an einer Wand montiert und über eine Stromleitung mit Strom versorgt. Im Boden befinden sich elektrische Einbauten, wie beispielsweise Sicherungen, Schalter, Klemmen oder ähnliches. Die Anzahl und Art dieser Einbauten richtet sich nach den an die Stromleitung anzuschließenden Verbrauchern, wie beispielsweise elektrische Maschinen.

Diese elektrischen Einbauten stellen also die Verbindung zwischen der oder den in den Bodenteil geführten Stromleitung(en) und den an im Deckelteil des Installationskasten angeordneten Steckdosen angeschlossenen elektrischen Verbraucher her.

Nachteil dieser Kästen nach dem Stand der Technik ist einerseits das Einführen der Stromleitung von oben, unten aber auch von der Seite in den Kastenboden, da der zur Verfügung stehende Raum im Boden durch die dort angeordneten oben erwähnten elektrischen Einbauten stark beengt ist und andererseits die nicht trennbaren Verbindungsdrähte, welche die elektrischen Einbauten im Boden mit den Steckdosen im Deckel verbinden und so dass Montieren dieser Kästen stark erschweren.

Weiters sind beispielsweise aus der US 4,818,822 Installationskästen bekannt, bei welchen die elektrischen Einbauten teilweise frei im Installationskasten hängen und mit einer durch diese Installationskästen durchführende Stromleitung verbunden sind. Diese Installationskästen sind jedoch nicht zur fixen Monatage an einer Wand oder am Boden vorgesehen sondern dienen als mobile Verteilerboxen, die um ein Stromkabel herumgebaut werden.

Ziel der vorliegenden Erfindung ist daher ein Installationskasten der eingangs erwähnten Art, der eine einfache Montage sowohl des Kastens an der Wand oder am Boden als auch eine einfache Zuführung der Stromleitung in den Boden des Kastens ermöglicht.

Erfindungsgemäß wird dies durch die kennzeichnenden Merkmale des Anspruchs 1 erreicht.

Dadurch bleibt innerhalb des Kastenbodens ausreichend Platz, um die Anschlussstromleitung in den Kasten zu führen. Kastenboden und Kastendeckel können unabhängig von einander montiert werden, sodaß eine wesentlich einfachere Montage des gesamten Kastens möglich ist.

Gemäß den kennzeichnenden Merkmalen des Anspruchs 2 ist es möglich nach der Montage des Kastenbodens an der Wand, den Kastendeckel in den Kastenboden einzuhängen um die einzig erforderliche drahtmäßige Verbindung zwischen Kastendeckel und Kastenboden, nämlich den Steck- bzw. Klemmteil am Gegensteck-bzw. Gegenklemmteil, welcher im Kastenboden angeordnet ist, zu montieren.

Durch die Merkmale des Anspruchs 3 wird der elektrische Kontakt zwischen Anschlussleitung und elektrischen Einbauten mit dem Aufstecken des Steck- bzw. Klemmteils auf den Gegensteck- bzw. Gegenklemmteil hergestellt. Nach dem Aufstecken ist daher kein weiterer Arbeitsschritt erforderlich, um die elektrischen Einbauten mit der Anschlussleitung zu verbinden.

Die Merkmale des Anspruchs 4 erfordern nach dem Aufstecken des Steck- bzw. Klemmteils auf den Gegensteck- bzw. Gegenklemmteil noch den weiteren Arbeitsschritt des Verbindens einer Anschlussleitung mit dem Steck- bzw. Klemmteil, wobei dies aufgrund der Tatsache, dass der Steck- bzw. Klemmteil bereits am Gegensteck- bzw. Gegenklemmteil fixiert ist, problemlos möglich ist.

Im folgenden erfolgt nun eine detaillierte Beschreibung des erfindungsgemäßen Installationskastens. Dabei zeigt
- Fig. 1: einen erfindungsgemäßen Installationskasten in geschlossenem Zustand
- Fig. 2: einen Schrägriß eines erfindungsgemäßen Installationskastens in geöffnetem Zustand
- Fig. 3: einen Seitenriß eines erfindungsgemäßen Installationskastens in geöffnetem Zustand
- Fig. 4: einen Schrägriß eines erfindungsgemäßen Installationskastens in geöffnetem Zustand mit eingehängtem Deckelteil

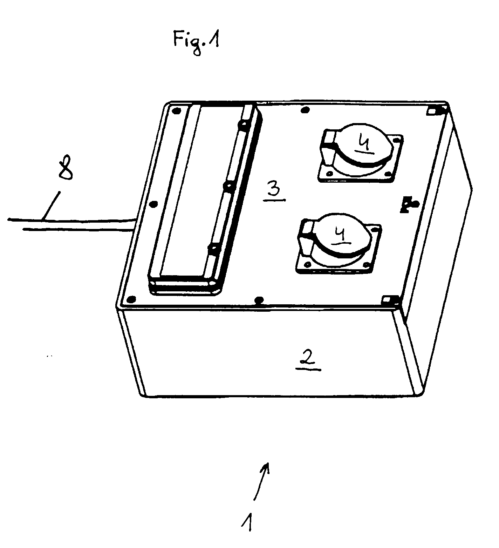

Fig. 1 zeigt den erfindungsgemäßen Installationskasten 1 mit Kastenboden 2 und Kastendeckel 3 in geschlossenem Zustand. Am Kastendeckel 3 sind Steckdosen 4 angeordnet, an welche Stromverbraucher verschiedenster Art angeschlossen werden können. Die Stromanschlussleitungen 8 werden von oben über eine Öffnung im Bodenteil 2 in diesen geführt.

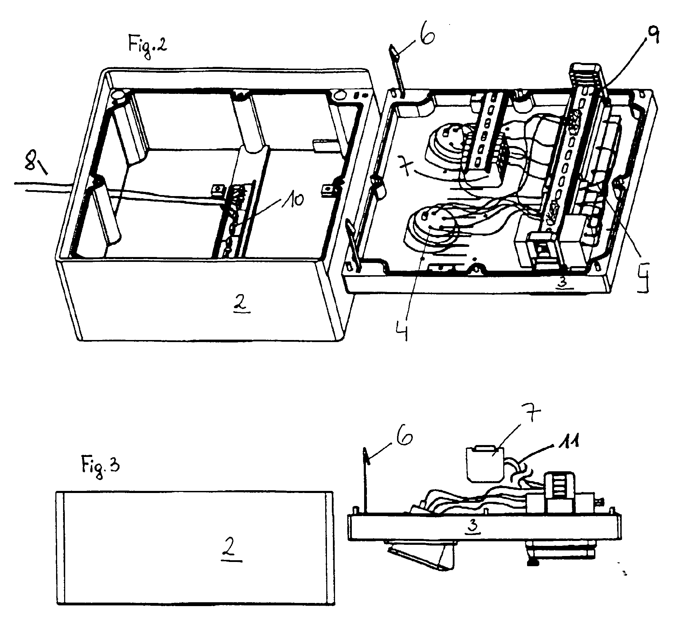

Fig. 2 und 3 zeigen denselben erfindungsgemäßen Installationskasten mit Kastenboden 2 und Kastendeckel 3 in geöffnetem Zustand. Im Kastendeckel 2 sind diverse elektrische Einbauten 5, wie beispielsweise Sicherungen, Schalter oder ähnliches hinter einer Leiste 9 angeordnet. Ebenfalls im Kastendeckel 3 angeordnet sind Steckdosen 4. Der Kastendeckel 3 weist weiters Scharnierhaken 6 auf. Im Bodenteil 2 ist ein Gegensteck- oder Gengenklemmteil 10 angeordnet.

Bei der Wandmontage kann nun zuerst der Kastenboden 2 an die Wand montiert werden. Der Kastendeckel 3 kann dabei zwischenzeitlich abgelegt werden. Nach der Wandmontage des Kastenbodens 2 kann die Stromanschlussleitung 8 problemlos vormontiert werden. Der Kastendeckel 3 braucht dabei immer noch nicht in die Hand genommen werden. Durch die Tatsache, dass der Kastenboden 2 keinerlei elektrische Einbauten beinhaltet, gestaltet sich das Vormontieren der Stromanschlussleitung 8 als sehr einfach. Anschließend kann der Kastendeckel 3 über die Scharnierhaken 6 in den Kastenboden 2 eingehängt werden und der Steck- bzw. Klemmteil 7 am Gegensteck- oder Gegenklemmteil 10 im Kastenboden 2 montiert werden, wodurch der Stromanschluß mit den im Kastendeckel 3 untergebrachten elektrischen Einbauten wie Sicherungen, Schalter, Steckdosen oder ähnliches verbunden wird. Der Kastendeckel 3 kann durch einfaches Aufstecken auf den Kastenboden 2 befestigt werden.

Es ist jedoch auch möglich die Stromanschlussleitung 8 direkt mit dem Steck- bzw. Klemmteil 7 zu verbinden. Der Gegensteck-bzw. Gegenklemmteil dient dann nur zur Fixierung des Steck-bzw. Klemmteils am Kastenboden 2. Nachdem diese Fixierung vorgenommen worden ist, kann das Stromanschlusskabel problemlos mit dem Steck- bzw. Klemmteil 7 verbunden werden.

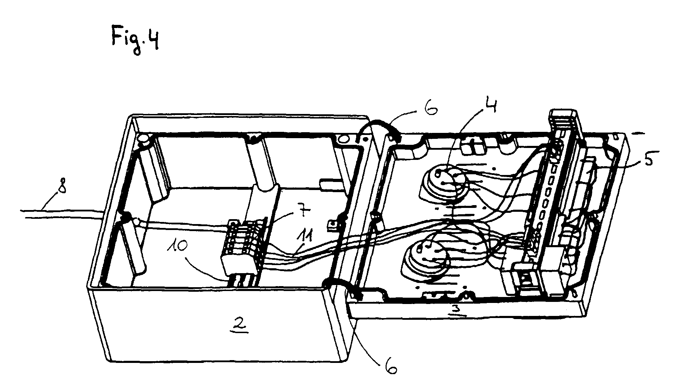

Fig. 4 zeigt einen erfindungsgemäßen Installationskasten wobei der Deckelteil 3 über die Scharnierhaken 6 in den Bodenteil 2 eingehängt ist. Sehr deutlich ist der Steck- bzw. Klemmteil 7 zu erkennen, der auf den Gegensteck- bzw. Gegenklemmteil 10 gesteckt bzw. geklemmt ist und so eine elektrisch leitende Verbindung zwischen Anschlussleitung 8 und den elektrischen Einbauten 4,5 im Deckelteil herstellt.

## Patentansprüche

1. Elektrischer Installationskasten (1) zur Verdrahtung elektrischer Einbauten (4,5) wie beispielsweise Sicherungen, Klemmen, Schalter, Steckdosen und ähnliches, mit einem Bodenteil (2), in welchen elektrische Anschlussleitungen (8) geführt werden und einem daran montierbaren Deckelteil (3), in welchem elektrische Einbauten (4,5) gehalten sind, **dadurch gekennzeichnet,** dass der Bodenteil (2) zur fixen Befestigung an einer senkrechten oder waagrechten Ebene vorgesehen ist und die im Deckelteil (3) angeordneten elektrischen Einbauten (4,5) über vorzugsweise flexible Verbindungsleitungen (11) mit einem Steck- bzw. Klemmteil (7) in elektrisch leitender Verbindung stehen, wobei der Steck- bzw. Klemmteil (7) an einem am Bodenteil (2) angeordneten, korrespondierenden Gegensteck-bzw. Gegenklemmteil (10) befestigbar ist, um mit den Anschlussleitungen (8) kontaktiert zu werden.

2. Installationskasten nach Anspruch 1 **dadurch gekennzeichnet,** dass der Deckelteil (3) über Scharnierhaken (6) in den Kastenboden (2) einhängbar ist.

3. Installationskasten nach Anspruch 1 und 2, **dadurch gekennzeichnet,** dass der korrespondierende Gegensteck- und Gegenklemmteil (10) mit mindestens einer Anschlussleitung (8) in elektrisch leitender Verbindung steht.

4. Installationskasten nach Anspruch 1 und 2, **dadurch gekennzeichnet,** dass der Steck- bzw. Klemmteil (7) mit mindestens einer Anschlussleitung (8) in elektrisch leitender Verbindung steht.
